Europäisches Patentamt

European Patent Office

Office européen des brevets

(19)

(11) **EP 1 133 929 A1**

(12) **EUROPÄISCHE PATENTANMELDUNG**

(43) Veröffentlichungstag:
**19.09.2001 Patentblatt 2001/38**

(51) Int Cl.⁷: **A23L 1/22**, A23P 1/04,
B01J 13/04, A23L 1/0534,
C11D 3/50

(21) Anmeldenummer: **01104493.0**

(22) Anmeldetag: **01.03.2001**

(84) Benannte Vertragsstaaten:
**AT BE CH CY DE DK ES FI FR GB GR IE IT LI LU
MC NL PT SE TR**
Benannte Erstreckungsstaaten:
**AL LT LV MK RO SI**

(30) Priorität: **13.03.2000 DE 10012199**

(71) Anmelder: **HAARMANN & REIMER GMBH
37601 Holzminden (DE)**

(72) Erfinder:
• **Uhlemann, Jens
37603 Holzminden (DE)**
• **Schleifenbaum, Birgit
37671 Höxter (DE)**

(74) Vertreter: **Mann, Volker, Dr. et al
Bayer AG
Konzernzentrale RP
Patente und Lizenzen
D-51368 Leverkusen (DE)**

(54) **Eingekapselte Substanzen mit kontrollierter Freisetzung**

(57) Neue eingekapselte Substanzen, die während einer Hitzebehandlung in wässrigem Medium weitgehend eingekapselt sind und erst während einer anschließenden Abkühlungsphase in Lösung gehen, können durch Verfahren zur Herstellung spherischer Kerne und nachfolgender Beschichtung mit ein oder mehreren hydrophoben Hüllen und einer Hülle aus modifizierter Cellulose hergestellt werden.

**Beschreibung**

Die Erfindung betrifft eingekapselte Substanzen, die während einer Hitzebehandlung in wässrigem Medium weitgehend eingekapselt bleiben und erst während einer anschließenden Abkühlungsphase in Lösung gehen.

Bei den eingekapselten Substanzen, z.B. Aromen (Geschmacksstoffen) und Riechstoffen, handelt es sich um komplexe flüssige Mischungen flüchtiger Komponenten. Bei der Herstellung und Zubereitung von aromatisierten Lebensmitteln und parfümierten Produkten besteht die Notwendigkeit zur Steuerung der Freisetzung von Aromen oder Riechstoffen, um Verluste zu vermeiden.

Besonders bei wasserhaltigen Lebensmitteln, die hoch erhitzt werden, ist der Schutz des Aromas eine technologische Herausforderung. Hier kommt es zu deutlichen Aromaverlusten aufgrund der Flüchtigkeit der Aromakomponenten beim Erwärmen. Zudem können bei Aromenkompositionen durch die unterschiedlichen Verlustraten der einzelnen Komponenten Aroma-Profilverschiebungen auftreten. Der Übergang des Aromas in die Flüssigkeit während der Aufheiz- und Hochtemperaturphase in einem Lebensmittel-Verarbeitungsprozess muss daher vermieden werden. Hierzu bietet sich die Einkapselung des Aromas an. Diese Aromakapsel sollte sich dann idealerweise während der Abkühlphase kontrolliert auflösen und damit auch das Aroma kontrolliert freisetzen.

Das Aufbringen von Überzügen auf Partikel zur Einstellung des Löslichkeits- bzw. Freisetzungsverhaltens und zum Schutz eingekapselter Substanzen ist bekannt (Lebensm.-Wiss.u.-Technol. 24, 289-297 (1991)); hier werden eine ganze Reihe von geeigneten Überzugsmaterialien, darunter Fette, Wachse, Hydrokolloide, wie z.B. auch modifizierte Cellulosen, und Proteine, aufgezählt.

In der WO 97/16078 werden Aroma- und Riechstoffengranulate beschrieben, die von einer Schutzhaut umhüllt sein können. Als mögliche Umhüllung wird u.a. auch modifizierte Cellulose genannt. Die Granulate selbst sind inhomogen und enthalten ein Trägermaterial und ein in ein filmbildendes Agens eingeschlossenes Aroma. Ziel dieser Anmeldung ist die Herstellung eines möglichst staubfreien Granulats. Die so erhaltenen Teilchen weisen eine unregelmäßige Form und ein nicht steuerbares Abgabeverhalten der Inhaltsstoffe auf.

Eine Herabsetzung der Freisetzungsgeschwindigkeit von eingekapselten Aromen mit hydrophilem Kern in wässrigen Systemen wird üblicherweise durch das Aufbringen von Überzügen erreicht. ("Microencapsulation and the Food Industry" (Lebensm.-Wiss. u.-Technol. 24, 289-297 (1991)).

Eine Herabsetzung der Wasserlöslichkeit kann durch das Aufbringen von hydrophoben Überzügen wie beispielsweise Fetten oder Wachsen erreicht werden, solange die Temperatur unterhalb des Schmelzbereichs dieser Überzüge liegt.

Bestimmte modifizierte Cellulosen eignen sich als Schutzüberzug zur Herabsetzung der Wasserlöslichkeit bei höheren Temperaturen. Sie zeichnen sich durch eine in der Gruppe der Hydrokolloide einzigartige reversible Bildung eines festen Gels in Wasser bei erhöhten Temperaturen aus. Die Viskosität dieser Gele steigt bei hohen Temperaturen stark an (oberhalb des stoffspezifischen Flockpunktes, d.h. der Temperatur, ab der feste, hochviskose Gele gebildet werden) und nimmt dann beim Abkühlen wieder ab. Die Reversibilität der Gelbildung hebt die modifizierten Cellulosen auch deutlich gegenüber dem Verhalten von Proteingelen ab, die zwar auch bei hoher Temperatur gelieren können, deren Gele beim Abkühlen aber nicht wieder in Lösung gehen.

Dieses im Vergleich zu anderen Gelsystemen inverse Viskositäts- und Temperaturverhalten oberhalb des Flockpunktes und die Reversibilität der Gelbildung von bestimmten modifizierten Cellulosen wird im angelsächsischen Sprachgebrauch als "reversible thermal gelation" bezeichnet. (Edible Films and Coatings: A Review, Food Technology, December 1986, 47 bis 59).

Die Ausnutzung der reversiblen Thermogelierung von Methylcellulose oder Hydroxypropylcellulose bei der Verwendung als Schutzmatrix für temperaturempfindliche Substanzen ist an sich bekannt. So wird z.B nach der WO 92/11084 Methylcellulose in einer Kapselmatrix für den Süßstoff Aspartam verwendet, der in wasserhaltigen Medien bei hohen Temperaturen instabil ist. Damit kann die Stabilität des Süßstoffs in Backwaren gesteigert werden.

In der WO 98/49910 wird die Verkapselung von verschiedenartigen Materialien mit einem Durchmesser von 30 bis 1000 um beschrieben. Bei den Materialien kann es sich um Arzneimittel, kosmetische Artikel, Haltbarkeitsmittel, Nahrungsmittel, wie Nüsse, Rosinen, Croutons oder Brotstücke, Wachstumregulatoren, Farbstoffen, Aromen, Pestizide oder Herbizide handeln. Diese Materialien werden als erstes mit einem hydrophoben Film und dann mit einer Schicht umhüllt, die ein von der Temperatur abhängiges reversibles Lösungsverhalten aufweist. Diese Schicht kann aus Cellulose-Derivaten oder anderen Polymeren bestehen. Der innere hydrophobe Film besteht beispielsweise aus Fetten, Paraffin oder Wasser. Es ist auch möglich, dass um die Schicht mit reversiblem Lösungsverhalten noch eine äußere hydrophobe Schicht gelegt wird. Das zu verkapselnde Material kann verschiedene Formen annehmen; vorzugsweise liegt es in Tablettenform vor.

Aufgabe der vorliegenden Erfindung war es, verkapselte Substanzen bereit zu stellen, die in wässrigem Medium sowohl während des Erhitzens als auch während der Haltezeit bei hohen Temperaturen durch die Verkapselung weitgehend geschützt sind und anschließend beim Abkühlen geregelt freigesetzt werden. Die Freisetzungsrate in der Abkühlphase sollte gezielt zeit- und temperaturabhängig steuerbar sein bis hin zur vollständigen Kaltwasserlöslichkeit. Ferner sollten die Freisetzungsraten für verschiedene Substanzen in Gemischen annähernd gleich sein, um eine unerwünschte Verschiebung des Abgabeprofils zu verhindern. Durch Verzögerung der Freisetzung bei hohen Temperaturen sollten Substanzverluste verringert werden.

Es wurden eingekapselte Substanzen bestehend aus einem Kern, ein oder mehreren hydrophoben Schichten und einer Schicht aus modifizierter Cellulose, die bei Temperaturerhöhung eine reversible Gelbildung aufweist, gefunden, die dadurch gekennzeichnet sind, dass die Kerne eine weitgehend kugelartige Form mit hoher Sphärizität aufweisen.

Die Sphärizität kann beispielsweise nach dem von H.Wadell ("Volume, Shape and Roundness of Rock Partides"; Journal of Geology 40 (1932) 443 - 451) angegebenen Kriterium gemessen werden:

$$\psi = \frac{x_v^2}{x_s^2}$$

mit dem volumenmäßig äquivalenten Partikeldurchmesser $x_v$ und dem oberflächenmäßig äquivalenten Durchmesser $x_s$. Definitionsgemäß kann die Sphärizität Zahlenwerte > 0 bis 1 annehmen. Erfindungsgemäß bevorzugte Kerne weisen eine Sphärizität von > 0,7, besonders bevorzugt von > 0,9 auf.

Die Kerne weisen eine glatte Oberfläche ohne Ecken und Kanten auf. Die Ecken und Kanten führen zu vermehrtem Abrieb, der sich als Fehlstellen in den Schichten festsetzt. Außerdem führen die Ecken und Kanten zu einem ungleichmäßigen Auftragen der Schichten.

Der Kern hat im allgemeinen einen Durchmesser im Bereich von 10 bis 5000, bevorzugt von 200 bis 2000 μm.

Die erfindungsgemäßen eingekapselten Substanzen weisen eine gleichmäßige Umhüllung mit ein oder mehreren hydrophoben Schichten und der Schicht aus modifizierter Cellulose auf. Hierdurch ist es möglich, die Substanz während des Aufheizens bei Temperaturen bis über den Flockpunkt der modifizierten Cellulose zu schützen und anschließend beim Abkühlen gezielt freizusetzen. Eingekapselte Substanzen mit unregelmäßiger Schichtdicke bei der Umhüllung, setzen die Substanzen in einem breiten Temperaturbereich frei. Eine gleichmäßige Schichtdicke kann bevorzugt bei Kernen mit hoher Sphärizität (>0,7) erreicht werden.

Substanzen, die in der Regel erfindungsgemäß eingekapselt werden, zersetzen sich in warmer, wässriger Umgebung oder sind leicht flüchtig. Beispielsweise seien genannt: Aromen und Riechstoffen, wie Erdbeeraroma, Nahrungsmittel wie Suppen-/Soßenpulver, Dessertpulver, pasteurisierte oder sterilisierte Fertiggetränke, pulverförmige Arzneimittel, wie Heißinstantformulierungen, Bedarfsgegenstände wie Waschmittel, Zusatzstoffe wie Süßstoffe, Farbstoffe, Pflanzenschutzmittel, wie Pestizide oder Herbizide. Erfindungsgemäß werden bevorzugt Aromen und/oder Riechstoffe, insbesondere bevorzugt Aromen verkapselt.

Hydrophobe Schichten zum Umhüllen der Kerne sind aus der WO 98/49910 bekannt. Sie weisen in der Regel einen Schmelzpunkt im Bereich von 20 bis 90 auf.

Als Materialien für die hydrophoben Schichten seien beispielsweise genannt: gehärtete Fette, Kokosfett, Kakaobutter, Mono- und Diglyceride, Fettsäuren wie Laurinsäure, Palmitin- und Stearinsäure, Lecithin und Wachse bzw. Mischungen der Komponenten.

Erfindungsgemäß enthalten die eingekapselten Substanzen eine oder mehrere, bevorzugt ein oder zwei, hydrophobe Schichten. Eine hydrophobe Schicht kann dabei direkt um den Kern gelegt werden. Eine weitere hydrophobe Schicht kann als äußere Schicht im Anschluss an die Schicht aus modifizierter Cellulose aufgebracht werden.

Im besonderen bevorzugt sind für die äußere hydrophobe Schicht Materialien, deren Schmelztemperatur identisch oder oberhalb der LCST-Temperatur (lower critical solution temperatur wie aus der WO 98/49910 bekannt) der Schicht aus modifizierter Cellulose und gleichzeitig unterhalb der maximalen Prozesstemperatur bei Verwendung der Kapsel beispielsweise im Lebensmittelverarbeitungsprozess liegt.

Im besonderen bevorzugt sind für die innere hydrophobe Schicht Materialien, deren Schmelztemperatur unterhalb der LCST-Temperatur (lower critical solution temperatur wie aus der WO 98/49910 bekannt) der Schicht aus modifizierter Cellulose und gleichzeitig unterhalb der bestimmungsgemäßen Verbrauchstemperatur beispielsweise beim Verzehr liegt.

Als modifizierte Cellulose für die erfindungsgemäßen Substanzen werden modifizierte Cellulosen verstanden, die thermoreversible Gele bilden können. Besonders bevorzugt sind hier Methylcellulose, Hydroxypropylcellulose, Hydroxypropylmethylcellulose, Ethylmethylcellulose, Ethylcellulose oder Gemische hiervon.

Nicht mit allen "modifizierte Cellulosen", können thermoreversible Gele gebildet werden. Gele anderer als der erfindungsgemäßen "modifizierten Cellulosen" wie z.B. die Carboxymethylcellulose verhalten sich nicht in der gewünschten Weise.

Die Cellulose für die erfindungsgemäß eingekapselten Substanzen bildet einen Film, der gerade bei hohen Temperaturen in wässrigen Medien eine hohe Viskosität hat und eine Diffusionssperre für die Substanzen darstellt. Bei allmählicher anschließender Abkühlung weist die Cellulose-Gelschicht erhöhte Quellbarkeit, kontrollierbare Viskositätsabnahme bis zur vollständigen rückstandsfreien Löslichkeit auf. Die eingekapselte Substanz kann dadurch zeit-/temperaturabhängig und linear freigesetzt werden. Die Funktionsweise des Überzugs (Verzögerungsrate) kann den jeweiligen Anwendungsanforderungen optimal angepasst werden.

Die modifizierte Cellulose bildet eine Umhüllung der Substanzkerne. Die Diffusion der Substanz durch die Hüllschicht und damit deren Freisetzung kann über die Wahl der Cellulose mit dem spezifischen Flockpunkt sowie über die Dicke der Hüllschicht gesteuert werden. Erfindungsgemäß bevorzugt werden modifizierte Cellulosen gewählt, deren Flockpunkt unterhalb der maximalen Prozesstemperatur, aber oberhalb der bestimmungsgemäßen Verzehrtemperatur liegt.

Die erfindungsgemäßen verkapselten Substanzen können 1 bis 50 Gew.-%, vorzugsweise 2 bis 20 Gew.-%, besonders bevorzugt 5 bis 10 Gew.-%, modifizierte Cellulose enthalten. Die jeweilige Cellulosemenge bestimmt die Schichtdicke und steuert die Freisetzungsraten für die Substanzen, wobei die Freisetzung um so langsamer stattfindet, je höher der Celluloseanteil ist.

Es wurde ein Verfahren zur Herstellung von eingekapselte Substanzen bestehend aus einem Kern, ein oder mehreren hydrophoben Schichten und einer Schicht aus modifizierter Cellulose, die bei Temperaturerhöhung eine reversible Gelbildung aufweist, gefunden, das dadurch gekennzeichnet ist, dass spherische Kerne in einem Wirbelbett mit hydrophoben Schichten und einer Schicht aus modifizierter Cellulose überzogen werden.

Soweit die Substanzen pulverförmig vorliegen und zu kugelförmigen Teilchen ausgebildet werden können, können sie in reiner Form verkapselt werden. Bevorzugt, insbesondere bei Flüssigkeiten werden sie mit hydrophilen Trägern, wie Gummi-Arabicum oder Dextrinen, wie Maltodextrin, gebunden.

Flüssigkeiten können durch verschiedene Verkapselungsverfahren in feste Kerne umgewandelt werden. Die erfindungsgemäßen Kerne mit hoher Spherizität werden bevorzugt hergestellt durch Wirbelschichtsprühgranulation wie beispielsweise nach EP 163 836 oder EP A 070 719, durch Verfahren zur Herstellung von Weichgelatinekapseln nach dem Tropfverfahren und durch Schmelzextrusionsverfahren mit nachfolgender Ausformung zu Kugeln. Die Herstellung dieser Kerne ist an sich bekannt. Erfindungsgemäß wird die kontinuierliche Herstellungsweise der Partikel in einer Apparatur nach EP A 0 163 836 bevorzugt.

Besonders bevorzugt ist die Herstellung durch kontinuierliche Wirbelschichtsprühgranulation.

Nach dem Schritt der Kernbildung kann eine hydrophobe Schicht aus beispielsweise Fett oder Wachs aufgebracht werden. Bei hydrophilen Kernen ist diese innere hydrophobe Schicht notwendig um eine Migration hydrophiler Substanzen aus dem Kern zu verhindern.

Für das Beschichten mit Überzugsfilmen mit gleichmäßiger definierter Schichtdicke werden geläufige Coatingverfahren eingesetzt. Dazu werden an sich bekannte Apparaturen, vorzugsweise Wirbelschichtapparaturen (Top-Spray-Coater, Bottom-Spray-Coater, Wurster-Coater), benutzt.

Fette oder Wachse der hydrophoben Überzüge werden vor dem Auftragen aufgeschmolzen und als Schmelze versprüht.

Als Lösungsmittel für die hydrophile Sprühlösung mit modifizierten Cellulosen können beispielsweise Wasser oder Wasser/Ethanolgemische verwandt werden. Die genannten modifizierten Cellulosen werden in einer Konzentration zwischen 0 % und 25 %, bevorzugt zwischen 1 % und 15 %, in der Sprühlösung angesetzt. Vorzugsweise werden für das Aufbringen von Überzügen modifizierte Cellulosen mit einem Veretherungsgrad gewählt, die der Sprühlösung nur eine geringe Viskosität geben.

Die geeigneten Zuluft-Temperaturen beim Beschichten mit den modifizierten Cellulosen in der Wirbelschicht sind im Bereich von 50°C bis 140°C. Die geeigneten Abluft-Temperaturen beim Beschichten in der Wirbelschicht sind im Bereich von 30°C bis 100°C. Die geeigneten Zuluft-Temperaturen beim Beschichten mit den hydrophoben Substanzen in der Wirbelschicht liegen unter deren Schmelzpunkt im Bereich von 0°C bis 100°C. Die geeigneten Abluft-Temperaturen beim Beschichten in der Wirbelschicht sind im Bereich von 20°C bis 40°C.

Die Schichtdicke beträgt 1 bis 200 μm, vorzugsweise 2 bis 100 μm, insbesondere bevorzugt 5 bis 50 μm.

Die Schichtdicke wird eingestellt durch die Menge an aufgesprühter Lösung.

Der Sprühlösung können anwendungsbezogen auch andere Substanzen bzw. Substanzgemische wie z.B. andere Hydrokolloide, Zucker oder auch Weichmacher wie z.B. Polyethylenglykol oder auch übliche Zusatzstoffe, wie z.B. Lebensmittelfarbstoffe, zugegeben werden.

Zur Erfindung gehört ferner ein Verfahren zur Anreicherung von Lebensmitteln mit erfindungsgemäß verkapselten Aromen. Als Lebensmittel, die die erfindungsgemäß eingekapselten Aromen enthalten, seien beispielsweise genannt: Instantsoßenpulver, Fertigsoße, pasteurisierte Getränke, Kaubonbons, Waffeln.

Zur Erfindung gehört ferner ein Verfahren zur Herstellung von parfümierten Bedarfsgegenständen, wie beispielsweise Waschmittel.

Die Verfahren sind dadurch gekennzeichnet, dass den Lebensmitteln oder den Bedarfsgegenständen die oben beschriebenen eingekapselten Aromen und/oder Riechstoffe zugegeben werden.

Vorzugsweise werden die Lebensmittel bei oder nach der Zugabe der erfindungsgemäßen verkapselten Aroma- und/oder Riechstoffe auf eine Temperatur über dem Flockpunkt der modifizierten Cellulose erhitzt und dann abgekühlt.

Durch das besondere Freisetzungsverhalten der erfindungsgemäßen verkapselten Substanzen können neue Qualitäten ihrer Anwendungsformen erzielt werden. So ist beispielsweise eine Erhitzung möglich, ohne dass ein zu starker Verlust oder Veränderung der eingekapselten Substanz eintritt.

Insbesondere beim Abkühlen der Lebensmittel tritt umgekehrt die erwünschte und definierte Freisetzung der eingekapselten Substanzen ein, die in ihrem Zeitverlauf durch die Art der Verkapselung gesteuert werden kann.

Da die verschiedenen Einzelaromakomponenten mit der gleichen Rate freigesetzt werden, und ihr Mengenverhältnis zueinander daher konstant bleibt, treten im Falle von Gemischen, wie beispielsweise Aromen, auch keine unerwünschten Verschiebungen des Aromaprofils ein.

**Beispiele**

**Beispiel 1 (Tomatengranulat):**

In einer Granulierapparatur des in DE-A 38 08 277 und EP 163 836 dargestellten Typs (mit den folgenden Merkmalen: Durchmesser Anströmboden: 225 mm, Sprühdüse: Zweistoffdüse; Sichtender Austrag: Zick-Zack-Sichter; Filter: internes Schlauchfilter) wird eine Lösung bestehend aus 44 Gew.-% Wasser, 11 Gew.-% Tomatenaroma, 13 Gew.-% Gummi arabicum und 32 Gew.-% hydrolysierter Stärke (Maltodextrin DE 15-19) granuliert. Die Lösung wird bei einer Temperatur von 32°C in den Wirbelschichtgranulator gesprüht. Zur Fluidisierung des Bettinhaltes wird Stickstoff in einer Menge von 140 kg/h eingeblasen. Die Eintrittstemperatur des Fluidisiergases beträgt 140°C. Die Temperatur des Abgases beträgt 76°C. Als Sichtgas wird ebenfalls Stickstoff in einer Menge von 15 kg/h mit einer Temperatur von 50°C zugeführt. Der Inhalt des Wirbelbettes beträgt ca. 1700 g. Die Granulierleistung beträgt ca. 2,8 kg pro Stunde. Man erhält ein frei fließendes Granulat mit einem mittleren Teilchendurchmesser von 1 mm bei einer Schüttdichte von 600 g/l. Die Granulate sind rund und weisen eine glatte Oberfläche auf. Aufgrund des konstanten Druckverlustes des Filters und des ebenfalls konstant bleibenden Bettinhalts ist von stationären Bedingungen hinsichtlich des Granulationsprozesses auszugehen.

In derselben Apparatur wurden die zuvor erzeugten Granulate mit dem Fett Witocan (Schmelzbereich 40 - 44°C) gecoatet; als Bettvorlage werden 400 g vorgelegt. Durch Anheben der Sichtgasmenge auf 23 kg/h bei 25°C wird kein Material ausgetragen, d.h. das Coaten findet im Batchbetrieb statt. Das Fett wird aufgeschmolzen und bei einer Temperatur von 74°C in den Wirbelschichtgranulator gesprüht. Die Temperatur des Zerstäubungsgases beträgt 70°C. Zur Fluidisierung des Bettinhaltes wird Stickstoff in einer Menge von 100 kg/h eingeblasen. Die Eintrittstemperatur des gekühlten Fluidisiergases beträgt 16°C. Die Temperatur des Abgases beträgt 28°C. Man erhält ein frei fließendes Granulat.

In derselben Apparatur werden die mit Fett gecoateten Granulate als Bettvorlage vorgelegt. Es wird eine Lösung aus 2,0 Gew.-% niedrig viskoser Methylcellulose (Viskosität einer 2 %igen wässrigen Lösung bei 20°C: 400 cP) in Wasser hergestellt. Der Flockpunkt dieser Methylcellulose liegt bei 50 - 55°C.

Die Methylcellulose-Lösung wird bei einer Temperatur von 22°C in den Wirbelschichtgranulator gesprüht. Die Temperatur des Zerstäubungsgases beträgt 30°C. Zur Fluidisierung des Bettinhaltes wird Stickstoff in einer Menge von 120 kg/h eingeblasen. Die Eintrittstemperatur des Fluidisiergases beträgt 140°C. Die Temperatur des Abgases beträgt 81°C.

In derselben Apparatur wurden die zuvor erzeugten Granulate nochmals mit dem Fett Revel A (von Fa. Loders Croklaan, Steigschmelzpunkt 59°C) gecoatet; als Bettvorlage werden 400 g vorgelegt. Durch Anheben der Sichtgasmenge auf 23 kg/h bei 25°C wird kein Material ausgetragen, d.h. das Coaten findet im Batchbetrieb statt. Das Fett wird aufgeschmolzen und bei einer Temperatur von 74°C in den Wirbelschichtgranulator gesprüht. Die Temperatur des Zerstäubungsgases beträgt 70°C. Zur Fluidisierung des Bettinhaltes wird Stickstoff in einer Menge von 100 kg/h eingeblasen. Die Eintrittstemperatur des gekühlten Fluidisiergases beträgt 16°C. Die Temperatur des Abgases beträgt 28°C. Man erhält ein frei fließendes Granulat.

Die Feststoffpartikel sind rund. Die dünne, sehr gleichmäßige Methylcellulose-Beschichtung beträgt 5 Gew.-% bezogen auf das Granulatgewicht. Die Granulate sind rund. REM-Aufnahmen der Bruchflächen zeigen eine weitgehend gleichmäßige Beschichtung der Granulate mit dem Fett.

**Beispiel 2 : Hitzekonservierte Tomaten-Naßsoße**

Eine Naßsoße wird mit Tomaten-Aromapartikeln, die mit einer inneren Fett-Schicht, einer anschließenden Schicht aus Methylcellulose, sowie einer äußeren Fettschicht überzogen sind, aromatisiert. Zu Konservierungszwecken wird die Soße für 10 Minuten ausgehend von Raumtemperatur auf 80°C bis 100°C erhitzt und anschließend in der verschlossenen Verpackung abgekühlt.

Vorteile:

Der Verlust flüchtiger Aromakomponenten während des Erhitzens wird reduziert. Die vollständige Aromafreisetzung erfolgt erst beim Abkühlen der Soße im geschlossenen Gefäß.

Während der Aufheizphase bei Temperaturen unterhalb des Schmelzbereichs der äußeren Fetthülle bleibt das Aroma in den Partikeln eingeschlossen und geschützt. Bei weiterer Temperaturerhöhung schmilzt beim Erreichen der Schmelztemperatur die äußere hydrophobe Hülle. Da der Schmelzbereich der äußeren Hülle höher gewählt wird als der Flockpunkt der Schicht aus modifizierten Cellulosen, bleibt das Aroma nach wie vor eingeschlossen. Während der Abkühlphase geht die Schicht aus modifizierten Cellulosen wieder in Lösung. Solange die Temperatur noch oberhalb des Schmelzbereichs der inneren hydrophoben Schicht liegt, schmilzt diese Schicht gibt schließlich den hydrophilen Kern frei, der sich dann in der wässrigen Matrix löst und das Aroma freisetzt.

**Patentansprüche**

1. Eingekapselte Substanzen bestehend aus einem Kern, ein oder mehreren hydrophoben Schichten und einer Schicht aus modifizierter Cellulose, die bei Temperaturerhöhung eine reversible Gelbildung aufweist, **dadurch gekennzeichnet, dass** die Kerne eine weitgehend kugelartige Form aufweisen.

2. Eingekapselte Substanzen nach Anspruch 1, **dadurch gekennzeichnet, dass** die Kerne eine Spherizität von 0,7 bis 1,0 aufweisen.

3. Eingekapselte Substanzen nach den Ansprüchen 1 und 2, **dadurch gekennzeichnet, dass** der Kern zusätzlich hydrophile Träger enthält.

4. Eingekapselte Substanzen nach den Ansprüchen 1 und 2, **dadurch gekennzeichnet, dass** der Kern durch Wirbelschichtsprühgranulation, Schmelzextrusion, oder einem Tropfverfahren zur Herstellung von Weichgelatinekapseln hergestellt worden ist.

5. Eingekapselte Substanzen nach den Ansprüchen 1 bis 3, **dadurch gekennzeichnet, dass** der Kern mit einer inneren hydrophoben Schicht und einer zweiten Schicht aus modifizierten Cellulose, die bei Temperaturerhöhung eine reversible Gelbildung aufweist, überzogen ist.

6. Eingekapselte Substanzen nach den Ansprüchen 1 bis 3, **dadurch gekennzeichnet, dass** der Kern mit einer inneren hydrophoben Schicht, einer zweiten Schicht aus modifizierten Cellulose, die bei Temperaturerhöhung eine reversible Gelbildung aufweist, und einer äußeren hydrophoben Schicht überzogen ist.

7. Verfahren zur Herstellung von eingekapselte Substanzen bestehend aus einem Kern, ein oder mehreren hydrophoben Schichten und einer Schicht aus modifizierter Cellulose, die bei Temperaturerhöhung eine reversible Gelbildung aufweist, gefunden, **dadurch gekennzeichnet, dass** spherische Kerne in einem Wirbelbett mit hydrophoben Schichten und einer Schicht aus modifizierter Cellulose überzogen werden.

8. Verfahren nach Anspruch 8, **dadurch gekennzeichnet, dass** der Kern zuerst mit einer hydrophoben Schicht und dann mit einer Schicht aus modifizierter Cellulose überzogen wird.

9. Verfahren nach Anspruch 8, **dadurch gekennzeichnet, dass** der Kern zuerst mit einer hydrophoben Schicht, dann mit einer Schicht aus modifizierter Cellulose, und nachfolgend mit einer weiteren hydrophoben Schicht überzogen wird.

10. Verwendung der eingekapselten Aromen und/oder Riechstoffe nach einem der Ansprüche 1 bis 6 zur Herstellung von Lebensmitteln oder Bedarfsgegenständen.

11. Verwendung nach Anspruch 10 zur Herstellung von Backwaren.

12. Verwendung nach Anspruch 10 zur Herstellung von Instantsoßenpulvern.

13. Verwendung nach Anspruch 10 zur Herstellung von Fertigsoßen.

14. Verwendung nach Anspruch 10 zur Herstellung von pasteurisierten Getränken.

15. Verwendung nach Anspruch 10 zur Herstellung von Kaubonbons.

16. Verwendung nach Anspruch 10 zur Herstellung von Waschmitteln.

17. Verwendung nach Anspruch 10 zur Herstellung von Waffeln.

Europäisches
Patentamt

**EUROPÄISCHER RECHERCHENBERICHT**

Nummer der Anmeldung

EP 01 10 4493

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| D,X | WO 98 49910 A (DELNOYE DIDIER ANDRE PIERRE ;NEERHOF HENDRIK JAN (NL); VILSTEREN G) 12. November 1998 (1998-11-12) * Ansprüche 1,3-9,15-18; Beispiele 1-9 * * Seite 3, Zeile 2 - Seite 4, Zeile 2 * * Seite 6, Zeile 6 - Seite 7, Zeile 15 * --- | 1,2,4-17 | A23L1/22 A23P1/04 B01J13/04 A23L1/0534 C11D3/50 |
| D,X | WO 97 16078 A (MENZI HEINI ;PERREN MATTHIAS (CH); GIVAUDAN ROURE INT (CH); RINGGE) 9. Mai 1997 (1997-05-09) * Ansprüche 1-5,8,10-17,23-26; Abbildung 1; Beispiele 1-6 * * Seite 2, Zeile 25-30 * * Seite 3, Zeile 28-35 * --- | 1-4,7, 10-17 | |
| X | US 5 310 558 A (POZZI FRANCO ET AL) 10. Mai 1994 (1994-05-10) * Ansprüche 1,2,6-14,16-20; Beispiele 1-19 * --- | 1-3,5-10 | |
| D,X | WO 92 11084 A (REDDING BRUCE K JR ;BUTCHER BRIAN (US); GARRISON WALTER S (US); SC) 9. Juli 1992 (1992-07-09) * Ansprüche 1,2,4,6-14,22-24; Abbildungen 1,6,7; Beispiele 1,3; Tabelle 4 * --- | 1,10-12, 17 | **RECHERCHIERTE SACHGEBIETE (Int.Cl.7)** A23P A23L A61K B01J C11D |
| P,X A | WO 00 16643 A (MOTHES HELMUT ;HAARMANN & REIMER GMBH (DE); HINDERER JUERGEN (DE);) 30. März 2000 (2000-03-30) * Ansprüche 1,5-19; Beispiele 1-4 * * Seite 3, Zeile 26 - Seite 8, Zeile 21 * --- | 1-4, 10-17 5-9 | |
| X | EP 0 170 752 A (WARNER LAMBERT CO) 12. Februar 1986 (1986-02-12) * Ansprüche 1,2; Beispiele 1,2 * * Seite 4, Zeile 29-37 * * Seite 7, Zeile 13-37 * ----- | 1,2,4,10 | |

Der vorliegende Recherchenbericht wurde für alle Patentansprüche erstellt

| Recherchenort | Abschlußdatum der Recherche | Prüfer |
|---|---|---|
| DEN HAAG | 31. Juli 2001 | Tallgren, A |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**            EP 01 10 4493

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-07-2001

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| WO | 9849910 | A | 12-11-1998 | NL | 1005948 | C | 09-11-1998 |
| | | | | NL | 1007696 | C | 03-11-1998 |
| | | | | AU | 7351198 | A | 27-11-1998 |
| | | | | EP | 0980215 | A | 23-02-2000 |
| WO | 9716078 | A | 09-05-1997 | EP | 0859554 | A | 26-08-1998 |
| | | | | JP | 2000513204 | T | 10-10-2000 |
| | | | | US | 6056949 | A | 02-05-2000 |
| US | 5310558 | A | 10-05-1994 | IT | 1244867 | B | 12-09-1994 |
| | | | | IT | 1244037 | B | 28-06-1994 |
| | | | | US | 5445828 | A | 29-08-1995 |
| | | | | US | 5629017 | A | 13-05-1997 |
| | | | | AT | 400295 | B | 27-11-1995 |
| | | | | AT | 131091 | A | 15-04-1995 |
| | | | | AU | 638583 | B | 01-07-1993 |
| | | | | AU | 8019991 | A | 09-01-1992 |
| | | | | BE | 1004882 | A | 16-02-1993 |
| | | | | CA | 2044398 | A | 05-01-1992 |
| | | | | CH | 683498 | A | 31-03-1994 |
| | | | | DE | 4122039 | A | 09-01-1992 |
| | | | | DK | 129591 | A | 05-01-1992 |
| | | | | ES | 2036457 | B | 01-03-1994 |
| | | | | FI | 913248 | A | 05-01-1992 |
| | | | | FR | 2664163 | A | 10-01-1992 |
| | | | | GB | 2245492 | A,B | 08-01-1992 |
| | | | | GR | 91100283 | A,B | 26-08-1992 |
| | | | | HU | 59591 | A | 29-06-1992 |
| | | | | HU | 9500435 | A | 28-09-1995 |
| | | | | IE | 911978 | A,B | 15-01-1992 |
| | | | | IL | 98525 | A | 23-07-1996 |
| | | | | JP | 6024961 | A | 01-02-1994 |
| | | | | LU | 87964 | A | 03-03-1992 |
| | | | | NL | 9101161 | A | 03-02-1992 |
| | | | | NO | 304579 | B | 18-01-1999 |
| | | | | PT | 98188 | A,B | 29-05-1992 |
| | | | | SE | 512373 | C | 06-03-2000 |
| | | | | SE | 9102072 | A | 05-01-1992 |
| | | | | RU | 2012330 | C | 15-05-1994 |
| | | | | ZA | 9104724 | A | 27-05-1992 |
| WO | 9211084 | A | 09-07-1992 | AU | 1241192 | A | 22-07-1992 |
| | | | | CN | 1066765 | A | 09-12-1992 |
| | | | | MX | 9102619 | A | 01-06-1992 |
| WO | 0016643 | A | 30-03-2000 | DE | 19942581 | A | 30-03-2000 |

EPO FORM P0461

Für nähere Einzelheiten zu diesem Anhang : siehe Amtsblatt des Europäischen Patentamts, Nr.12/82

## ANHANG ZUM EUROPÄISCHEN RECHERCHENBERICHT
## ÜBER DIE EUROPÄISCHE PATENTANMELDUNG NR.

EP 01 10 4493

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-07-2001

| Im Recherchenbericht angeführtes Patentdokument | Datum der Veröffentlichung | Mitglied(er) der Patentfamilie | Datum der Veröffentlichung |
|---|---|---|---|
| WO 0016643 A | | AU 6083999 A<br>EP 1113725 A | 10-04-2000<br>11-07-2001 |
| EP 0170752 A | 12-02-1986 | US 4568560 A<br>CA 1255162 A<br>DE 3485183 A<br>ZA 8409446 A | 04-02-1986<br>06-06-1989<br>21-11-1991<br>31-07-1985 |

EPO FORM P0461

Für nähere Einzelheiten zu diesem Anhang : siehe Amtsblatt des Europäischen Patentamts, Nr.12/82